# EUROPEAN PATENT APPLICATION

(11) **EP 1 527 933 A2**
(43) Date of publication of application: **04.05.2005**
(21) Application number: 04025406.2
(22) Date of filing: 26.10.2004
(51) Int. Cl.: B60K 17/16

(54) **Power transmission system for vehicle including a differential**

(30) Priority: 28.10.2003 JP 2003367567
(71) Applicant: Toyoda Koki Kabushiki Kaisha, Kariya-shi, Aichi (JP)
(72) Inventor: Nakajima, Sinichiro, Sayama-shi Saitama 350-1331 (JP); Nishiji, Makoto, Sayama-shi Saitama 350-1331 (JP)
(74) Representative: HOFFMANN EITLE

(57) **Abstract**

A differential gearing 2 of twin differential type including a center differential unit 14 of planetary gear type and a front differential unit 12 of bevel gear type which are received within a housing 10 is separated from a gear box 6 of a transmission 4, and is disposed within PTO (power transfer off) 8. A common specification can be used for the twin differential unit, and influences by the oil variety can be avoided, assuring a given performance in any application.

## Description

### Technical Field

The present invention relates to a power transmission system for vehicle, in particular, to a power transmission system for vehicle having a differential gearing formed by a twin differential unit in which a center differential unit and another differential unit associated with left and right wheels such as a center differential unit of planetary gear type and a front differential unit of bevel gear type are constructed together in an integral manner.

### Background Art

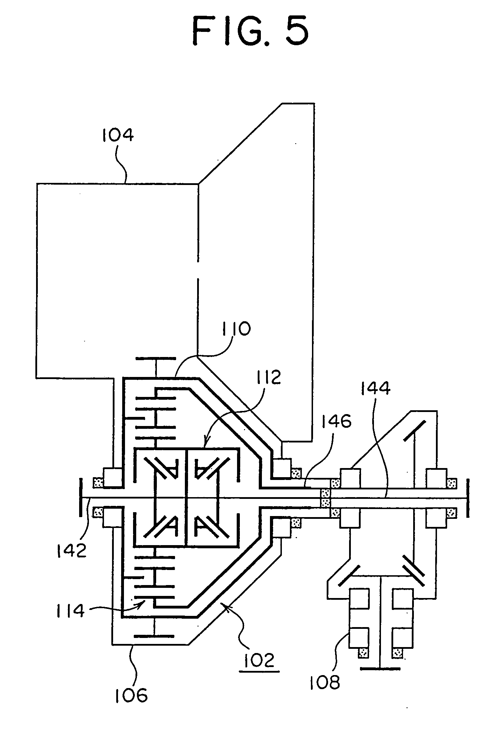

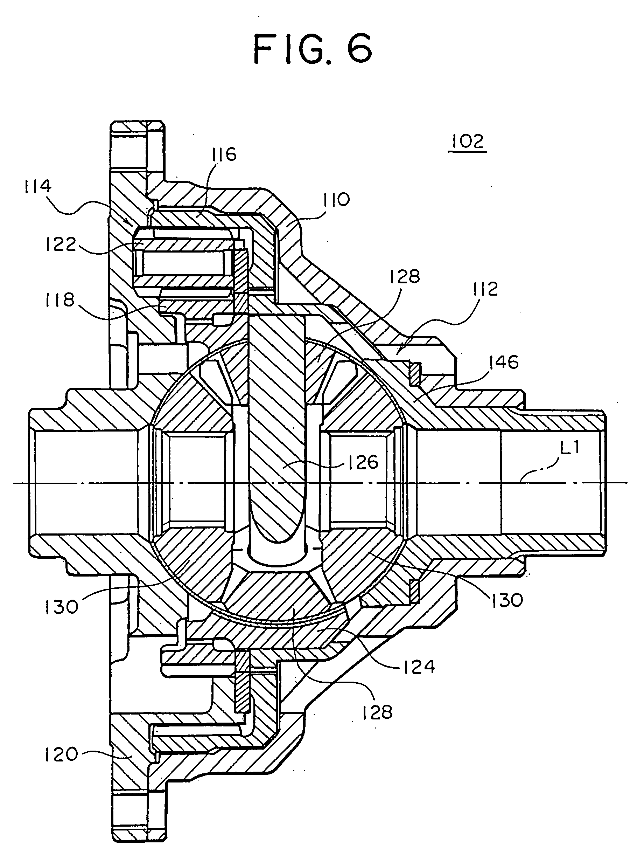

As shown in Figs. 5 and 6, a conventional power transmission system for vehicle includes a differential gearing 102 for vehicle of a twin differential type having an integral construction of a front differential unit 112 of bevel gear type and a center differential unit 114 of planetary gear type which is normally housed within a gear box 106 which is integral with a transmission 104 (see, for example, EP 1 239 188 A1).

The front differential unit of bevel gear type 112 generally comprises two or four pinion gears 128 and a pair of side gears 130 which mesh with the pinion gears 128. The pinion gears 128 are mounted within a differential unit case 124 on a pinion shaft 126, and the pair of side gears 130 are in meshing engagement with the pinion gears 128. The both side gears 130 are coupled to left and right side axle shafts 142 and 144 (see Fig. 5) by a spline connection.

When a vehicle is running straightforward on a flat road, left and right drive wheels experience a rotational resistance of an equal magnitude, and accordingly, the left and right side gears 130 of the front differential unit 112 rotate integraly with an equal number of revolutions in accordance with the rotation of the pinion gears 128. However, when cornering, the front differential unit of bevel gear type 112 provides a correction for a differential rotation between the left and the right drive wheel by a rotation of the pinion 128 about the own axis thereof.

The center differential unit of planetary gear type 114 comprises an internal gear 116 which is rotatably received within a housing 110, a sun gear 118 which is disposed radialy inward of and in concentric relationship with the internal gear 116, a plurality of planet gears 122 disposed between the internal gear 116 and the sun gear 118 in meshing engagement with the both gears 116 and 118, and a planetary carrier 120 which carries the planet gears 122 in a manner such that they can rotate about an axis of rotation L1 of the internal gear 116 and the sun gear 118 while allowing the rotation of each planet gear 122 about its own axis.

In the power transmission system for vehicle constructed in the manner mentioned above, an output from the transmission 104 is input to the housing 110 of the differential gearing 102 which is received within the gear box 106, and the front differential unit of bevel gear type 112 delivers an output to the left and the right axel shaft 142 and 144 through the both side gears 130 while the center differential unit of planetary gear type 114 delivers an output from an output member 146 connected to the internal gear 116 to PTO (power transfer off) to be transmitted to the rear side therethrough.

In the conventional arrangement mentioned above, the differential gearing 102 is disposed within the gear box 106, and accordingly, it is necessary to design the differential gearing depending on the structure of the gear box 106, resulting in an increased cost. The differential action limiting function is influenced by an oil (gear oil, ATF of CVT oil) within the gear box 106, presenting a problem that the performance cannot be kept constant for the variety of the oil. In addition, if ATF or CVT oil is used in the gear box 106, there is a likelihood that abraded powder may be produced, presenting a problem that such an abraded powder may have an adverse influence on other parts.

### Disclosure of the Invention

Accordingly, it is an object of the present invention to provide a power transmission system for vehicle in which the design of a differential gearing need not be changed for a different type of the gear box, allowing a common specification to be used for various gear boxes. It is another object of the present invention to provide a power transmission system for vehicle which assures a given performance of a differential gearing without being influenced by an oil used. It is a further object of the present invention to provide a power transmission system for vehicle which is capable of minimizing adverse influences of abraded powder.

Above objects are accomplished by separating a differential gearing including an integral assembly of a center differential unit and another differential unit associated with left and right wheels which is received within a housing from a gear box of a transmission and disposing it within PTO.

### Brief Description of Drawings

Fig. 1 is a schematic illustration of an entire arrangement of a power transmission system for vehicle according to one embodiment;
Fig. 2 is a longitudinal section of a differential gearing used in the power transmission system for vehicle shown in Fig. 1;
Fig. 3 is a schematic illustration of a power transmission system for vehicle according to a second embodiment;
Fig. 4 is a longitudinal section of a differential gearing used in the power transmission system for vehicle shown in Fig. 3;
Fig. 5 is a schematic illustration of a conventional power transmission system for vehicle; and
Fig. 6 is a longitudinal section of a differential gearing used in the power transmission system for vehicle shown in Fig. 5.

### Best Mode for Carrying out the Invention

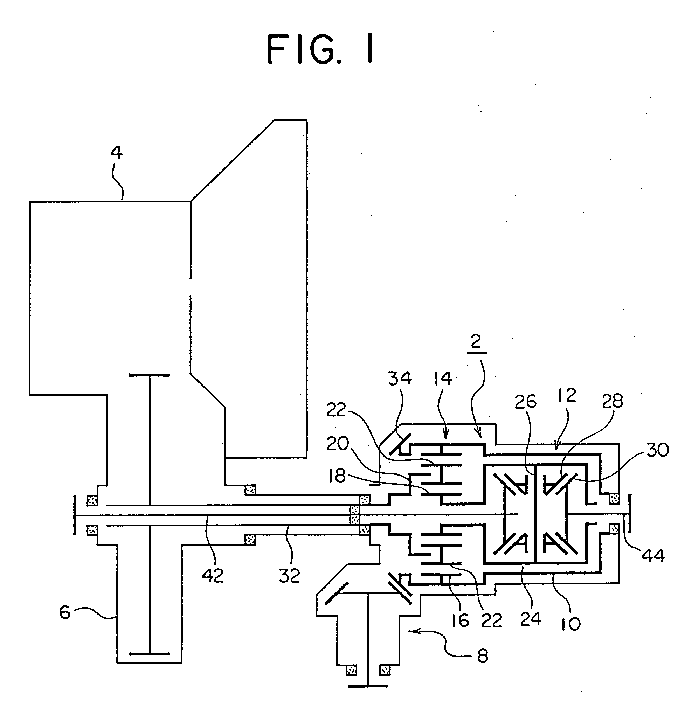

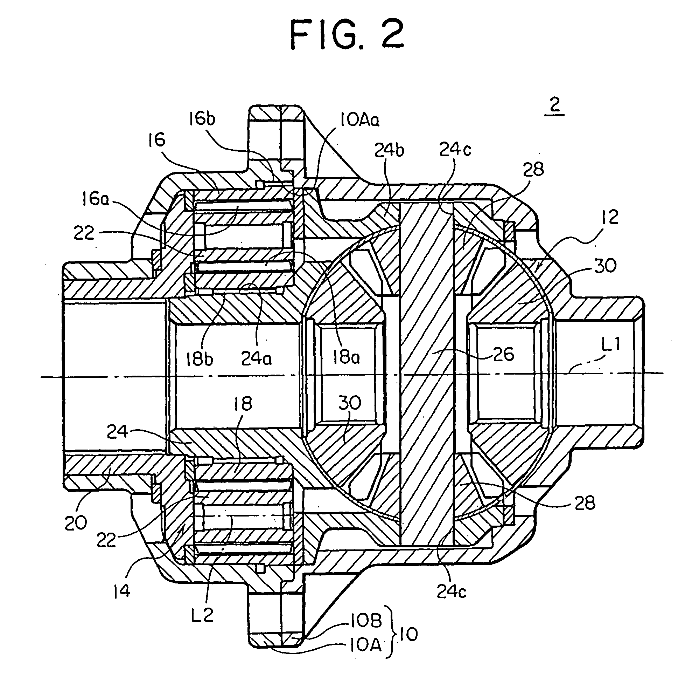

Referring to the drawings, several embodiments of the present invention will now be described. Fig. 1 is a schematic illustration of an entire arrangement of a power transmission system for vehicle according to one embodiment of the present invention, and Fig. 2 is a longitudinal section of a differential gearing used in the power transmission system shown in Fig. 1. In this embodiment, a differential gearing for vehicle represents a twin differential unit having an integral construction of a front differential unit of bevel gear type and a center differential unit of planetary gear type, and the differential gearing, generally denoted by numeral 2, is disposed within PTO 8 rather than within a gear box 6 of a transmission 4 as in a conventional arrangement.

As shown in Fig. 2, the differential gearing for vehicle 2 of twin differential type comprises the front differential unit 12 of bevel gear type and the center differential unit 14 of planetary gear type which are integrally assembled into a housing 10, which comprises a first housing 10A and a second housing 10B disposed in abutment against each other.

An internal gear 16 having gear teeth 16A formed around its inner peripheral surface is received inside the housing 10, and the internal gear is formed with a spline 16b at a part of the outer peripheral surface thereof. A spline 10Aa is formed around the inner peripheral surface of the housing (or more specifically, the first housing 10A) and engaged by the spline 16b on the internal gear 16 to achieve an integral rotation of the internal gear 16 and the housing 10. A sun gear 18 which rotates about the same axis of rotation L1 as the internal gear 16 is disposed inside the internal gear 16. The sun gear 18 represents an external gear having gear teeth 18a around its outer peripheral surface.

A plurality of planet gears 22 which are carried by a planetary carrier 20 are disposed between the internal gear 16 and the sun gear 18 in meshing engagement with the internal gear 16 and the sun gear 18. The planetary carrier 20 is formed with a plurality of carrying spaces, not shown, at an equal circumferential spacing, and each planet gear 22 is carried in one of these carrying spaces, with the tooth crest of the planet gear being disposed in sliding contact with the internal surface of the carrying space.

The planetary carrier 20 is arranged so as to be capable of rotation about the axis of rotation L1 of the internal gear 16 and the sun gear 18, and the planet gears 22 carried the planetary carrier 20 are arranged so that a center axis L2 thereof rotates about the axis of rotation L1 of the planetary carrier 20 as the planetary carrier 20 rotates and so that the planet gear 22 can rotate about its own axis L2 within the carrying space in which it is received. In this embodiment, the internal gear 16, the sun gear 18 and the planet gears 22 have helical gear teeth, and each planet gear 22 is in meshing engagement with internal gear 16 which is disposed on the radialy outer side thereof and with the sun gear 18 which is disposed on the radialy inner side thereof.

The sun gear 18 is formed with a spline 18b in its inner peripheral surface, in which a spline 24a formed on the outer peripheral surface of a reduced diameter portion of a coupling 24 is fitted. The coupling 24 has a portion 24b of a greater diameter which extends externally (or to the right as viewed in Fig. 2) of the sun gear 18 and the portion of a greater diameter 24b is formed with a pair of circular holes 24c which extend diametrically through the wall of the portion 24b. A pinion shaft 26 which is directed orthogonal to the axis of rotation L1 of the sun gear 18 and the internal gear 16 has its opposite ends inserted into the circular holes 24c.

Pinion gears 28 are fitted on the pinion shaft 16 at locations disposed toward the opposite ends thereof. The pair of pinion gears 28 are in meshing engagement with a pair of side gears 30 disposed on the opposite sides of the pinion shaft 26 and in alignment with the axis of rotation L1 of the internal gear 16 and the sun gear 18 of the center differential unit of planetary gear type 14. The pinion shaft 26 inserted through the circular holes 24c formed in the coupling 24, the pair of pinion gears 28 which are fitted to the pinion shaft 26 and the pair of side gears 30 disposed on the opposite sides of the pinion shaft and meshing with the pinion gears 26 constitute together the front differential unit 12 of bevel gear type. In this embodiment, the left and the right side gear 30 are connected to left and right axle shafts 42 and 44, respectively, of the front side.

In use of the differential gearing 2 for vehicle arranged in the manner mentioned above and having an integral construction of the front differential unit 12 and the center differential unit 14, the planetary carrier 20 is connected to an output shaft 32 of the transmission 4, for example, and when a drive from an engine is input to the planetary carrier 20, the drive is transmitted through the plurality of planet gears 22 which are carried by the planetary carrier 20 to rotate the internal gear 16 and the sun gear 18 about the axis of rotation L1. The outer periphery of the internal gear 16 is coupled through the spline 16b to the housing 10, and the rotation of the internal gear 16 is delivered to PTO 8 through a ring gear 34 (see Fig. 1) which is secured to the outer surface of the housing 10 and thus is transmitted to the rear portion.

When the pinion shaft 26 rotates in response to the rotation of the sun gear 18 and the coupling 24, the pair of pinion gears 28 which are fitted on the pinion shaft 26 rotate about the axis of rotation L1 of the internal gear 16 and the sun gear 18, which axis is in alignment with the center axis of the left and the right front axle shaft 42 and 44. When a vehicle is running straightforward on a flat road, left and right drive wheels experience a rotational resistance of an equal magnitude, and accordingly, the left and the right side gear 30 rotate at an equal number of revolutions in accordance with the rotation of the pinion gears 28, whereby the entire assembly rotates as a single block. When cornering, the both pinion gears 28 rotate about the pinion shaft 26, correcting for a differential rotation of the left and the right wheel or left and right side gears 30.

In the power transmission system for vehicle according to the present embodiment, the differential gearing 2 is separated from the gear box 6 which is integral with the transmission 4 and is mounted within the PTO 8 in distinction to the conventional arrangement. Accordingly, it is not subject to any limitation by the construction of the gear box 6, allowing a common specification to be implemented. Lubrication of the differential gearing 2 takes place always by a gear oil without being influenced by the variety of the transmission 4, allowing a stable performance to be achieved free from influences of the oil variety. In addition, adverse influences caused by abraded powder can be minimized.

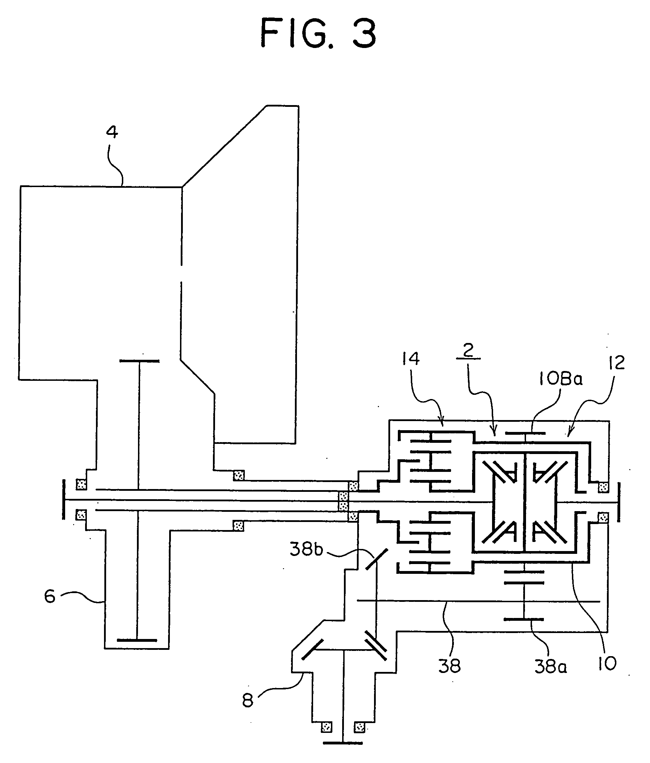

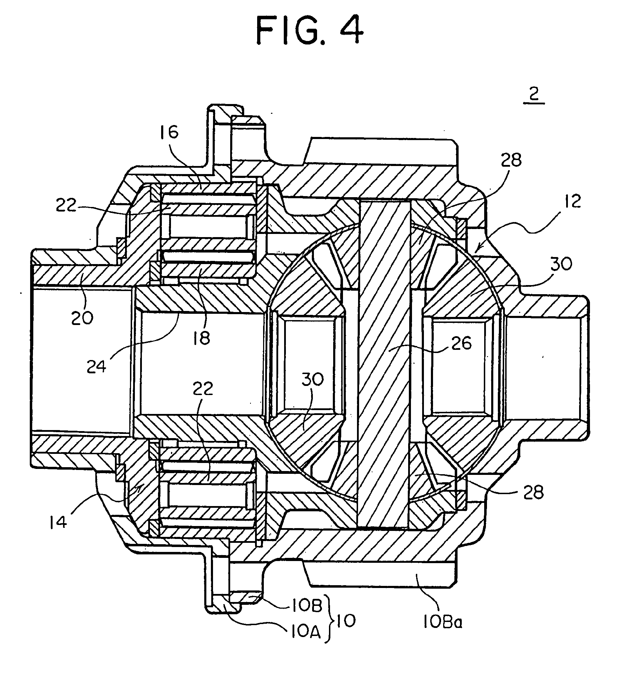

Figs. 3 and 4 show a power transmission system for vehicle according to a second embodiment and a differential gearing used therein. The internal construction of the differential gearing of this embodiment remains the same as in the first embodiment, and accordingly, corresponding parts are designated by like reference characters as used before in order to avoid a duplicate description except for a difference between the both embodiment which will be described below.

In the second embodiment, an output from the differential gearing 2 is transmitted to PTO 8 through a countershaft 38. Specifically, an output gear 10Ba which is formed around the outer periphery of the housing 10 of a differential gearing 2 is in meshing engagement with a gear 38a mounted on the countershaft 38 of PTO 8, whereby an output from the internal gear 16 of the center differential unit of planetary gear type 14 is transmitted to the PTO 8 through a bevel gear 38b on the countershaft 38.

Again, the differential gearing for vehicle 2 is disposed within the PTO 8 rather than within the gear box 6 of the transmission 4 in distinction to the prior art, achieving similar functions and effects as achieved in the first embodiment. While the twin differential unit described in the above embodiments comprises an integral assembly of the front differential unit 12 of bevel gear type and the center differential unit 14 of planetary gear type, it should be understood that the present invention is not limited to such configuration, but that the twin differential unit may comprise an integral assembly of a center differential unit having a different construction and another differential unit for left and right wheels of a different construction.

## Claims

1. A power transmission system for vehicle having a differential gearing including a center differential unit and another differential unit for left and right wheels which are integrally received within a housing, the differential gearing being disposed within PTO.

2. A power transmission system for vehicle according to Claim 1 in which the differential gearing comprises a twin differential unit formed by an integral assembly of a center differential unit of planet gear type and a front differential unit of bevel gear type.

3. A power transmission system for vehicle according to Claim 1 or 2 in which an output to the PTO is delivered through a ring gear mounted on the housing of the differential gearing.

4. A power transmission system for vehicle according to Claim 1 or 2 in which an output is delivered to the PTO through a countershaft from the differential gearing.
